# EUROPEAN PATENT SPECIFICATION

(11) **EP 3 202 599 B1**
(45) Date of publication and mention of the grant of the patent: **05.09.2018**
(21) Application number: 17152113.1
(22) Date of filing: 19.01.2017
(51) Int. Cl.: B60C 17/00, B60C 13/00

(54) **PNEUMATIC TIRE**
LUFTREIFEN
PNEUMATIQUE

(30) Priority: 05.02.2016 JP 2016020433
(43) Date of publication of application: 09.08.2017
(73) Proprietor: Sumitomo Rubber Industries, Ltd., Kobe-shi, Hyogo-ken (JP)
(72) Inventor: KAMIGORI, Atsushi, Kobe-shi, Hyogo 651-0072 (JP)
(74) Representative: Manitz Finsterwald Patentanwälte PartmbB

(56) References cited:
- EP-A1- 0 542 252
- WO-A1-2015/115140
- US-A1- 2011 284 143
- US-A1- 2016 031 267

## Description

### BACKGROUND OF THE INVENTION

### Field of the Invention

The present invention relates to pneumatic tires. Specifically, the present invention relates to run flat tires that include load support layers.

### Description of the Related Art

At pneumatic tire having the features of the preamble of claim 1 is known from US 2011/0284143 A1. Similar tires are disclosed in US 2016/0031267 A1 and WO 2015/115140 A1.

In a run flat tire in which load support layers are disposed inward of sidewalls, if the internal pressure is reduced due to puncture, load is supported by the support layers. The run flat tire allows running over a certain distance even in the punctured state. The running in the punctured state is referred to as run flat running.

During the run flat running, when the tire is moved over a protruding object on a road surface, or when the tire falls into a pothole, a bead portion of the tire may be greatly deformed. In general, a carcass ply is disposed around the beads. Deformation of the bead portion may cause breakage of a cord included in the carcass ply. Damage that involves the breakage of the cord is referred to as pinch cut. A run flat tire that allows generation of the pinch cut to be inhibited also in the run flat running, is required.

JP2007-153276 discloses a run flat tire in which reinforcing layers that include cords are inserted in portions around bead portions in order to inhibit generation of the pinch cut. In addition thereto, a method in which stiffness of a carcass is enhanced by the carcass being formed by two carcass plies in order to inhibit generation of the pinch cut, and a method in which stiffness of a carcass is enhanced by a carcass ply being formed of a material having a high modulus in order to inhibit generation of the pinch cut, are known.

In any of a case where the reinforcing layers are inserted in the portions around the beads, a case where the number of the carcass plies is increased, and a case where the carcass ply is formed of a material having a high modulus, a vertical stiffness constant of the tire is enhanced. Such a tire may cause degradation of ride comfort during normal running. Further, insertion of the reinforcing layers and increase of the number of carcass plies may cause increase of the weight of the tire.

An object of the present invention is to provide a pneumatic tire that allows pinch cut to be inhibited while good ride comfort and an appropriate weight are maintained.

### SUMMARY OF THE INVENTION

The present invention provides a pneumatic tire according to claim 1.

A pneumatic tire according to the present invention includes: a tread; a carcass; a pair of beads; and a pair of load support layers. The carcass includes a carcass ply. The carcass ply includes a main portion and a pair of turned-up portions, the main portion extends from a portion inward of one of the beads in an axial direction to a portion inward of the other of the beads in the axial direction, and the pair of turned-up portions are disposed outward of the beads, respectively, in the axial direction. The load support layers extend, in portions inward of the carcass, from portions inward of the beads, respectively, in the axial direction to portions inward of the tread in a radial direction. When a reference point P represents a point, on an outer surface of the tire, which is distant from a bead base line by 25 mm in the radial direction, a distance D1, at the reference point P, from the outer surface of the tire to an outer side surface of the main portion is greater than or equal to 3 mm and not greater than 10 mm.

The inventors studied in detail a mechanism of generating pinch cut. During run flat running, high tensile stress is applied to the main portion of the carcass ply in the bead portions since the load support layers are disposed. It has been found that a main cause of the pinch cut is that the main portion is broken due to the tensile stress. The inventors have found that, in the bead portions, a distance from the outer surface of the tire to the main portion is appropriately adjusted, whereby the tensile stress on the main portion is effectively reduced.

In the pneumatic tire according to the present invention, when the reference point P represents a point, on the outer surface of the tire, which is distant from the bead base line by 25 mm in the radial direction, the distance D1, at the reference point P, from the outer surface of the tire to the outer side surface of the main portion is greater than or equal to 3 mm and not greater than 10 mm. Thus, during run flat running, tensile stress on the main portion is effectively reduced. In the tire, pinch cut is inhibited. In the tire, no reinforcing layer is additionally provided in the bead portion. In the tire, the number of the carcass plies need not be increased, and the carcass ply need not be formed of a material having a high modulus. The tire allows good ride comfort during normal running to be maintained. Further, in the tire, addition of reinforcing layer and increase of the number of carcass plies need not be performed, whereby the weight is appropriately maintained.

Furthermore, the load support layers include first layers that extend radially outward from the portions inward of the beads, respectively, in the axial direction, and second layers disposed outward of the first layers, respectively, in the radial direction. A hardness H1 of each first layer is higher than a hardness H2 of each second layer.

Moreover, a ratio (T1/T) of a height T1, in the radial direction, from the bead base line to an outer side end of the first layer, relative to a cross-sectional height T of the tire, is greater than or equal to 1/3 and not greater than 1/2.

Preferably, the hardness H1 is higher than or equal to 85 and not higher than 100.

Preferably, when F represents a thickness, of each load support layer, measured along the normal line V, and F1 represents a thickness, of each first layer, measured along the normal line V, a ratio (F1/F) of the thickness F1 to the thickness F is greater than or equal to 0.8.

### BRIEF DESCRIPTION OF THE DRAWINGS

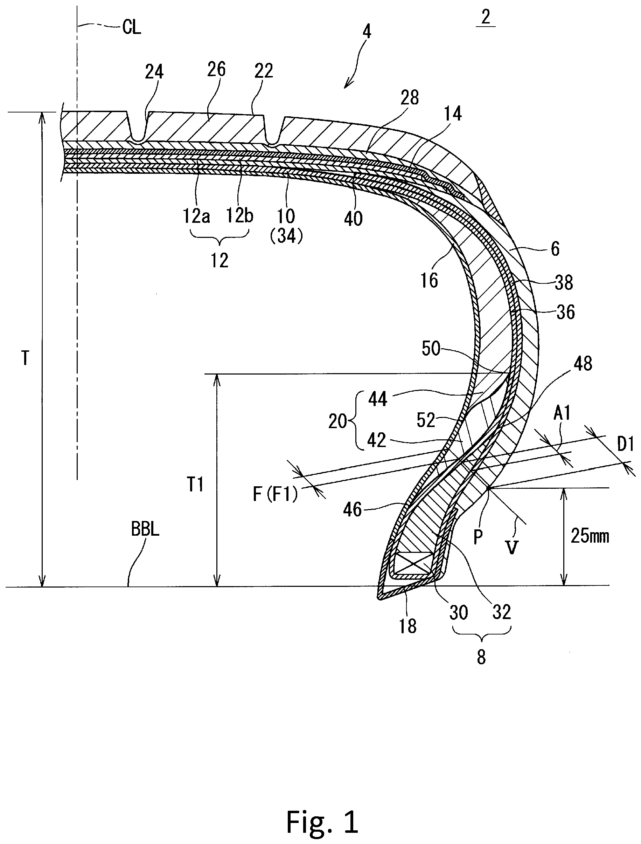

FIG. 1 is a cross-sectional view of a part of a tire according to one embodiment of the present invention.

### DESCRIPTION OF THE PREFERRED EMBODIMENTS

The following will describe in detail the present invention based on preferred embodiments with reference where appropriate to the accompanying drawing.

FIG. 1 shows a pneumatic tire 2. In FIG. 1, the up-down direction represents the radial direction of the tire 2, the left-right direction represents the axial direction of the tire 2, and the direction orthogonal to the surface of the drawing sheet represents the circumferential direction of the tire 2. In FIG. 1, an alternate long and short dash line CL represents the equator plane of the tire 2. The tire 2 has a shape that is symmetric about the equator plane CL except for a tread pattern. In FIG. 1, a solid line BBL represents a bead base line. The bead base line BBL corresponds to a line that defines a rim diameter (see JATMA) of a rim on which the tire 2 is mounted. The bead base line BBL extends in the axial direction.

The tire 2 includes a tread 4, a pair of sidewalls 6, a pair of beads 8, a carcass 10, a belt 12, a band 14, an inner liner 16, a pair of chafers 18, and a pair of load support layers 20. The tire 2 is of a tubeless type. The tire 2 is mounted to a passenger car.

The tread 4 has a shape that projects outward in the radial direction. The tread 4 forms a tread surface 22 that comes into contact with a road surface. The tread 4 has grooves 24 formed therein. A tread pattern is formed by the grooves 24. The tread 4 has a cap layer 26 and a base layer 28. The cap layer 26 is disposed outward of the base layer 28 in the radial direction. The cap layer 26 is layered over the base layer 28. The cap layer 26 is formed of crosslinked rubber excellent in wear resistance, heat resistance, and grip performance. The base layer 28 is formed of crosslinked rubber excellent in adhesiveness. A typical base rubber of the base layer 28 is natural rubber. The tread 4 is formed of crosslinked rubber excellent in wear resistance, heat resistance, and grip performance.

The sidewalls 6 extend almost inward from ends, respectively, of the tread 4 in the radial direction. The outer side ends, in the radial direction, of the sidewalls 6 are jointed to the tread 4. The sidewalls 6 are formed of crosslinked rubber excellent in cut resistance and weather resistance. The sidewalls 6 are disposed outward of the carcass 10 in the axial direction. The sidewalls 6 prevent damage to the carcass 10.

From the viewpoint of preventing damage, the hardness of the sidewall 6 is preferably higher than or equal to 50 and more preferably higher than or equal to 55. From the viewpoint of ride comfort during normal running, the hardness is preferably not higher than 70 and more preferably not higher than 65. In the present invention, the hardness is measured by a type A durometer in compliance with the standard of "JIS K6253". The durometer is pressed against the cross-sectional surface shown in FIG. 1, to measure the hardness. The measurement is performed at a temperature of 23°C. The hardness of each of an apex described below and the load support layer 20 is measured in the same manner.

The tire 2 may have clinches disposed almost inward of the sidewalls 6 in the radial direction, which is not shown. In this case, the clinches are disposed outward of the beads 8 and the carcass 10 in the axial direction. The clinches are formed of crosslinked rubber excellent in wear resistance. The clinches are brought into contact with a flange of a rim.

The beads 8 are disposed inward of the sidewalls 6, respectively, in the radial direction. Each bead 8 includes a core 30 and an apex 32 that extends outward from the core 30 in the radial direction. The core 30 is ring-shaped and includes a wound non-stretchable wire. A typical material of the wire is steel. The apex 32 is tapered outward in the radial direction. The apex 32 is formed of highly hard crosslinked rubber.

From the viewpoint that the bead 8 portions are allowed to have appropriate stiffness, the hardness of the apex 32 is preferably higher than or equal to 60 and more preferably higher than or equal to 65. From the viewpoint of ride comfort during normal running, the hardness is preferably not higher than 90 and more preferably not higher than 80.

The carcass 10 includes a carcass ply 34. The carcass ply 34 is extended on and between one of the beads 8 and the other of the beads 8. The carcass ply 34 extends along the tread 4 and the sidewalls 6. The carcass ply 34 is turned up around the cores 30 from the inner side toward the outer side in the axial direction. By the turning-up, the carcass ply 34 includes a main portion 36 and a pair of turned-up portions 38. The main portion 36 extends from a portion inward of one of the beads 8 in the axial direction to a portion inward of the other of the beads 8 in the axial direction. The turned-up portions 38 are disposed outward of the beads 8, respectively, in the axial direction. Each turned-up portion 38 extends such that an end 40 of the turned-up portion 38 is disposed immediately below the belt 12. In other words, the turned-up portions 38 overlap the belt 12. The carcass 10 has a so-called "ultra-highly turned-up structure". The carcass 10 having the ultra-highly turned-up structure contributes to durability of the tire 2 in a punctured state. The carcass 10 may include two or more carcass plies 34.

As shown in FIG. 1, the main portion 36 is disposed inward of the apex 32 in the axial direction. The turned-up portion 38 is disposed outward of the apex 32 in the axial direction. In other words, the apex 32 is disposed between the main portion 36 of the carcass ply 34 and the turned-up portion 38 thereof.

The carcass ply 34 is formed of multiple cords aligned with each other, and topping rubber, which is not shown. An absolute value of an angle of each cord relative to the equator plane CL is from 75°to 90°. In other words, the carcass 10 forms a radial structure. The cords are formed of an organic fiber. Preferable examples of the organic fiber include polyethylene terephthalate fibers, nylon fibers, rayon fibers, polyethylene naphthalate fibers, and aramid fibers.

The belt 12 is disposed inward of the tread 4 in the radial direction. The belt 12 and the carcass 10 are layered over each other. The belt 12 reinforces the carcass 10. The belt 12 includes an inner layer 12a and an outer layer 12b. The inner layer 12a and the outer layer 12b are each formed of multiple cords aligned with each other, and topping rubber, which is not shown. Each cord is tilted relative to the equator plane CL. An absolute value of the tilt angle is greater than or equal to 10° and not greater than 35° in general. A direction in which the cords of the inner layer 12a are tilted relative to the equator plane CL is opposite to a direction in which the cords of the outer layer 12b are tilted relative to the equator plane CL. A material of the cords is preferably steel. An organic fiber may be used for the cords. The belt 12 may include three or more layers.

The band 14 is disposed outward of the belt 12 in the radial direction. The width of the band 14 is almost equal to the width of the belt 12 in the axial direction. The band 14 is formed of a cord and topping rubber, which are not shown. The cord is helically wound. The band 14 has a so-called jointless structure. The cord extends substantially in the circumferential direction. An angle of the cord relative to the circumferential direction is less than or equal to 5° and more preferably less than or equal to 2°. The belt 12 is held by the cord, whereby lifting of the belt 12 is inhibited. The cord is formed of an organic fiber. Preferable examples of the organic fiber include nylon fibers, polyester fibers, rayon fibers, polyethylene naphthalate fibers, and aramid fibers.

A reinforcing layer is formed by the belt 12 and the band 14. The reinforcing layer may be formed merely by the belt 12. The reinforcing layer may be formed merely by the band 14.

The inner liner 16 is joined to inner surfaces of the carcass 10 and the load support layers 20. The inner liner 16 is formed of crosslinked rubber. Rubber excellent in airtightness is used for the inner liner 16. The inner liner 16 maintains internal pressure of the tire 2.

The chafers 18 are disposed near the beads 8, respectively. When the tire 2 is mounted on a rim, the chafers 18 contact with the rim. By the contact, portions near the beads 8 are protected. The chafers 18 are formed of a fabric and rubber impregnated into the fabric.

The load support layers 20 are disposed inward of the carcass 10. The load support layers 20 are disposed outward of the inner liner 16. The load support layers 20 are disposed between the carcass 10 and the inner liner 16. The load support layers 20 extend from portions inward of the beads 8 in the axial direction to portions inward of the belt 12 in the radial direction. The load support layers 20 are tapered inward in the radial direction near the beads 8, respectively. The load support layers 20 are tapered inward in the axial direction in portions inward of the belt 12.

Each load support layer 20 includes a first layer 42 and a second layer 44. Each load support layer 20 is formed of the first layer 42 and the second layer 44. The first layer 42 is disposed inward of the bead 8 in the axial direction. The first layer 42 extends radially outward from a portion inward of the bead 8 in the axial direction. An inner side end 46 of the first layer 42 is disposed inward of an outer side end 48 of the apex 32 in the radial direction. An outer side end 50, in the radial direction, of the first layer 42 is disposed axially outward of an inner side end 52, in the radial direction, of the second layer 44. The second layer 44 is disposed outward of the first layer 42 in the radial direction. The second layer 44 extends outward from the outer side of the first layer 42 in the radial direction. The inner side end 52, in the radial direction, of the second layer 44 is disposed axially inward of the outer side end 50, in the radial direction, of the first layer 42. A hardness H1 of the first layer 42 is higher than the hardness of a conventional load support layer. The hardness H1 of the first layer 42 is higher than a hardness H2 of the second layer 44.

In FIG. 1, a point P represents a reference point on an outer surface of the tire 2. The reference point P is positioned on the outer surface of the bead 8 portion. A distance, in the radial direction, from the bead base line BBL to the reference point P is 25 mm. In FIG. 1, a straight line V represents a line that is normal to the outer surface, and is drawn from the reference point P toward the outer side surface of the main portion 36. A double-headed arrow D1 represents a distance, at the reference point P, from the outer surface of the tire 2 to the outer side surface of the main portion 36. That is, the distance D1 represents a distance, measured along the normal line V, between the reference point P and the outer side surface of the main portion 36. In the tire 2, the distance D1 is greater than or equal to 3 mm and not greater than 10 mm.

When the carcass 10 includes two or more plies, the distance D1 is a distance between the reference point P and the outer side surface of the main portion 36 that is disposed at the outermost position in the axial direction.

Hereinafter, an action and effect of the present invention will be described.

The inventors studied in detail a mechanism of generating pinch cut. During run flat running, when a tire is moved over a protruding object on a road surface or when the tire falls into a pothole, the bead portion of the tire is greatly deformed. The bead portion curves so as to project inward in the radial direction from a rim flange that acts as the originating point. Tensile stress is applied to the carcass ply due to the curving. In the run flat tire, the load support layer is disposed inward of the bead in the axial direction. Therefore, particularly near a position between the bead and the load support layer, the tensile stress on the main portion of the carcass ply is increased. It has been found that a main cause of the pinch cut is that the main portion is broken due to the tensile stress. Thus, the inventors have arrived at the technical idea that, in the bead portion, reduction of a distance between the main portion and the rim flange that acts as an originating point of the curving leads to reduction of tensile stress on the main portion. The inventors have found that appropriate adjustment of a distance from the outer surface of the tire to the main portion leads to effective reduction of the tensile stress on the main portion.

In the pneumatic tire 2 according to the present invention, when the reference point P represents a point, on the outer surface of the tire 2, which is distant from the bead base line BBL by 25 mm in the radial direction, the distance D1, at the reference point P, from the outer surface of the tire 2 to the outer side surface of the main portion 36 is greater than or equal to 3 mm and not greater than 10 mm. The distance D1 is reduced as compared to that of a conventional tire. Thus, during run flat running, tensile stress on the main portion 36 is effectively reduced. In the tire 2, pinch cut is inhibited. In the tire 2, no reinforcing layer is additionally provided in the bead 8 portion. In the tire 2, the number of the carcass plies 34 need not be increased, and the carcass ply 34 need not be formed of a material having a high modulus. In the tire 2, a vertical stiffness constant is appropriately maintained. The tire 2 allows good ride comfort during normal running to be maintained.

Further, in the tire 2, a reinforcing layer need not be additionally provided and the number of the carcass plies 34 need not be increased, whereby increase of the weight is inhibited. In the tire 2, the material of the carcass ply 34 is not changed to a material having a high modulus, whereby increase of production cost is inhibited.

From the viewpoint of more effectively reducing tensile stress on the main portion 36, the distance D1 is more preferably not greater than 9 mm. From the viewpoint of durability of the bead 8 portion during run flat running, D1 is more preferably greater than or equal to 4 mm.

As described above, when the distance D1 is reduced as compared to that of a conventional tire, pinch cut can be effectively prevented. However, reduction of the distance D1 causes reduction of the thickness of the apex 32. When the apex 32 having a high hardness has a reduced thickness, stiffness of the bead 8 portion is reduced. This may cause reduction of durability of the bead 8 portion during run flat running. In the tire 2, run flat durability may be reduced.

The inventors have found that durability of the bead 8 portions is improved in a case where the hardness of the load support layers 20 near the beads 8 is enhanced even when the distance D1 is reduced. Further, the inventors have found that a vertical stiffness constant of the tire 2 is appropriately maintained in a case where, even when the hardness of the load support layers 20 near the beads 8 is enhanced, the hardness of the load support layers 20 in portions outward thereof in the radial direction is appropriately maintained. When adjustment of the distance D1, and appropriate adjustment of the hardness of the load support layers 20 near the beads 8, and the hardness of the load support layers 20 in portions outward thereof in the radial direction are combined with each other, resistance to pinch cut, run flat durability, and ride comfort during normal running can become advantageous.

As described above, each load support layer 20 includes: the first layer 42 disposed inward of the bead 8 in the axial direction; and the second layer 44 disposed outward of the first layer 42 in the radial direction. The hardness H1 of the first layer 42 is higher than the hardness H2 of the second layer 44. The first layers 42 contribute to run flat durability in the bead 8 portions. The second layers 44 contribute to maintaining of an appropriate vertical stiffness constant. In the tire 2, run flat durability and ride comfort during normal running become advantageous while resistance to pinch cut is advantageously achieved.

The hardness H1 of the first layer 42 is preferably higher than or equal to 85. When the hardness H1 is higher than or equal to 85, the first layers 42 effectively contribute to run flat durability in the bead 8 portions. In the tire 2, run flat durability is advantageous. The hardness H1 of the first layer 42 is preferably not higher than 100. When the hardness H1 is not higher than 100, stiffness in the bead 8 portions is appropriately maintained. In the tire 2, the vertical stiffness constant is appropriately maintained. The tire 2 allows good ride comfort during normal running to be maintained.

The hardness H2 of the second layer 44 is preferably higher than or equal to 60. When the hardness H2 is higher than or equal to 60, the load support layers 20 effectively support load on the tire 2 during run flat running. The tire 2 is excellent in run flat durability. The hardness H2 of the second layer 44 is preferably not higher than 80. When the hardness H2 is not higher than 80, the side portions of the tire 2 can be appropriately deformed during normal running. The tire 2 allows good ride comfort during normal running to be maintained.

From the viewpoint that both run flat durability and ride comfort during normal running are advantageously achieved, a ratio (H1/H2) is preferably greater than or equal to 1.2 and preferably not greater than 1.7. In this viewpoint, the ratio (H1/H2) is more preferably greater than or equal to 1.3 and more preferably not greater than 1.6.

In FIG. 1, a double-headed arrow T represents a cross-sectional height of the tire 2. A double-headed arrow T1 represents a height, in the radial direction, from the bead base line BBL to the outer side end of the first layer 42. A ratio (T1/T) of the height T1 to the height T is greater than or equal to 1/3. When the ratio (T1/T) is greater than or equal to 1/3, the first layers 42 effectively contribute to run flat durability in the bead 8 portions. In the tire 2, run flat durability is advantageous. The ratio (T1/T) is not greater than 1/2. When the ratio (T1/T) is not greater than 1/2, the vertical stiffness constant in the bead 8 portions is appropriately maintained. The tire 2 allows good ride comfort during normal running to be maintained.

In FIG. 1, a double-headed arrow F represents a width, of the load support layer 20, measured along the normal line V. A double-headed arrow F1 represents a width, of the first layer 42 of the load support layer 20, measured along the normal line V. In the embodiment shown in FIG. 1, at a position where the normal line V intersects the load support layer 20, the first layer 42 is merely disposed. At the position, the second layer 44 is not disposed. The inner side end 52 of the second layer 44 is disposed outward of the normal line V. That is, in the present embodiment, the width F and the width F1 are equal to each other. In the tire 2, at a position where the normal line V intersects the load support layer 20, the second layer 44 may be disposed. That is, the inner side end 52 of the second layer 44 may be disposed inward of the normal line V. In this case, the width F1 is less than the width F. In this case, a ratio (F1/F) of the width F1 to the width F is preferably greater than or equal to 0.8. When the ratio (F1/F) is greater than or equal to 0.8, the first layers 42 effectively contribute to run flat durability in the bead 8 portions. In the tire 2, run flat durability is advantageous. In this viewpoint, the ratio (F1/F) is more preferably greater than or equal to 0.9. The most advantageous case is a case where, as shown in FIG. 1, the first layer 42 is merely disposed at a position where the normal line V intersects the load support layer 20. That is, the ratio (F1/F) is most preferably 1.0.

In FIG. 1, a double-headed arrow A1 represents a thickness of the apex 32 at the reference point P. That is, the thickness A1 represents a distance between the outer side surface and the inner side surface, of the apex 32, measured along the normal line V. From the viewpoint of more effectively reducing tensile stress on the main portion 36, the distance A1 is preferably less than or equal to 7 mm. From the viewpoint of durability in the bead 8 portions during run flat running, A1 is preferably not less than 1 mm.

In the tire 2, the dimensions and angles of the components of the tire 2 are measured in a state where the tire 2 is mounted on a normal rim, and the tire 2 is inflated with air to a normal internal pressure, unless otherwise specified. During the measurement, no load is applied to the tire 2. In the description herein, the normal rim represents a rim that is specified according to the standard with which the tire 2 complies. The "standard rim" in the JATMA standard, the "Design Rim" in the TRA standard, and the "Measuring Rim" in the ETRTO standard are included in the normal rim. In the description herein, the normal internal pressure represents an internal pressure that is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are included in the normal internal pressure. When the tire 2 is for a passenger car, the dimensions and angles are measured in a state where the internal pressure is 180 kPa. In the description herein, the normal load represents a load that is specified according to the standard with which the tire 2 complies. The "maximum load capacity" in the JATMA standard, the "maximum value" recited in "TIRE LOAD LIMITS AT VARIOUS COLD INFLATION PRESSURES" in the TRA standard, and the "LOAD CAPACITY" in the ETRTO standard, are included in the normal load.

### EXAMPLES

### [Example 1]

A pneumatic tire (run flat tire) of example 1 which had the structure shown in FIG. 1 except that each load support layer merely had one layer, was obtained. The specifications of the tire are indicated below in Table 1. The size of the tire was "245/40RF19". Table 1 indicates that each load support layer merely had one layer since Table 1 indicates that the hardness H1 and the hardness H2 are equal to each other.

### [Comparative example 1]

A tire of comparative example 1 was obtained in the same manner as for example 1 except that the thickness A1 was changed such that the distance D1 was as indicated in Table 1. In the change, the thickness of the entirety of the bead portion was not changed. That is, although the distance D1 was increased as compared to that in example 1, the thickness of the load support layer was reduced, as compared to that in example 1, by the increased distance. Comparative example 1 was a conventional run flat tire.

### [Examples 2 to 3, Comparative example 2]

Tires of examples 2 to 3 and comparative example 2 were each obtained in the same manner as for example 1 except that the thickness A1 was changed such that the distance D1 was as indicated in Table 1. Also in this change, the thickness of the entirety of the bead portion was not changed.

### [Example 4]

A tire of example 4 having the structure shown in FIG. 1 was obtained. The tire of example 4 had the same structure as the tire of example 1 except that the load support layer had a first layer and a second layer, and the hardness H1 of the first layer was as indicated in Table 2. In the tire, the ratio (F1/F) was 1.0.

### [Examples 5 to 6]

Tires of examples 5 to 6 were each obtained in the same manner as for example 4 except that the hardness H1 of the first layer was as indicated in Table 2.

### [Examples 7 to 8]

Tires of examples 7 to 8 were each obtained in the same manner as for example 4 except that the thickness A1 was changed such that the distance D1 was as indicated in Table 2. In this change, the thickness of the entirety of the bead portion was not changed.

### [Examples 9 to 11]

Tires of examples 9 to 11 were each obtained in the same manner as for example 4 except that the ratio (T1/T) was as indicated in Table 3.

### [Resistance to pinch cut]

The tires were each mounted on a normal rim (size=19×8.5J), and mounted to front wheels of a commercially-available front-wheel drive passenger car. The internal pressure of the tire was set to a normal pressure, and a punctured state was produced. Commercially available tires were mounted to rear wheels. After the tires were mounted, the vehicle was loaded with a cargo, and a vertical load corresponding to a normal load was applied to the tire. A protruding object having a height of 200 mm was disposed on a road surface in a test course, and the vehicle was caused to run over the protruding object with the front wheels. The tire was visually observed, and whether or not damage due to pinch cut occurred, was confirmed. The starting speed of the vehicle was set as 40 km/h, the speed was increased stepwise in increments of 10 km/h, and a speed at which the tire was damaged was measured. The results are each indicated below in Tables 1 to 3 as an index with the result of comparative example 1 being 100. The greater the value of the index is, the more difficult generation of pinch cut is. The greater the value of the index is, the better the result is.

### [Run flat durability]

The tires were each mounted on a normal rim (size=19×8.5J), the internal pressure of the tire was set to a normal pressure, and a punctured state was produced. The tire was mounted to a drum-type tire testing machine, and a vertical load corresponding to 65% of the normal load was applied to the tire. Running with the tire at a speed of 80 km/h on a drum having a radius of 1.7 m was performed, and a running distance was measured until the tire was broken. The results are each indicated below in Tables 1 to 3 as an index with the result of comparative example 1 being 100. The greater the value of the index is, the better the result is. The greater the value of the index is, the more excellent run flat durability is.

### [Weight]

The weight of the tire was measured. The results are each indicated below in Tables 1 to 3 as an index with the result of comparative example 1 being 100. The less the value of the index is, the less the weight is. The less the value of the index is, the better the result is.

### [Vertical stiffness constant]

A vertical stiffness constant of the tire was measured under the following conditions.
Used rim: 19×8.5J
Internal pressure: 240 kPa
Load: 5.0 kN

The results are each indicated below in Tables 1 to 3 as an index with the result of comparative example 1 being 100. The less the value of the index is, the less the vertical stiffness constant is. The less the value of the index is, the better the result is.

### [Ride comfort]

The sample tires were each mounted on a standard rim (size=19×8.5J), and inflated with air to an internal pressure of 240 kPa. The tire was mounted to a commercially available passenger car. The car was caused to run on an asphalt road surface in a test course, and a driver made a sensory evaluation for ride comfort. The results are indicated below in Tables 1 to 3 with the result of comparative example 1 being 6. The greater the value is, the better the evaluation is.

**Table 1 Evaluation result**

| | Comparative example 1 | Example 2 | Example 1 | Example 3 | Comparative example 2 |
|---|---|---|---|---|---|
| Hardness H1 | 65 | 65 | 65 | 65 | 65 |
| Hardness H2 | 65 | 65 | 65 | 65 | 65 |
| Ratio (T1/T) | - | - | - | - | - |
| Distance D1 [mm] | 11 | 3 | 8 | 10 | 14 |
| Thickness A1 [mm] | 8 | 0 | 5 | 7 | 11 |
| Weight | 100 | 100 | 100 | 100 | 100 |
| Resistance to pinch cut | 100 | 140 | 120 | 110 | 80 |
| Run flat durability | 100 | 47 | 93 | 98 | 107 |
| Vertical stiffness constant | 100 | 94 | 97 | 99 | 103 |
| Ride comfort | 6 | 6.5 | 6.25 | 6 | 5.5 |

**Table 2 Evaluation result**

| | Example 5 | Example 4 | Example 6 | Example 7 | Example 8 |
|---|---|---|---|---|---|
| Hardness H1 | 85 | 90 | 100 | 90 | 90 |
| Hardness H2 | 65 | 65 | 65 | 65 | 65 |
| Ratio (T1/T) | 1/2 | 1/2 | 1/2 | 1/2 | 1/2 |
| Distance D1 [mm] | 8 | 8 | 8 | 3 | 10 |
| Thickness A1 [mm] | 5 | 5 | 5 | 0 | 7 |
| Weight | 100 | 100 | 100 | 100 | 100 |
| Resistance to pinch cut | 120 | 120 | 120 | 140 | 110 |
| Run flat durability | 110 | 113 | 116 | 100 | 116 |
| Vertical stiffness constant | 98 | 99 | 100 | 95 | 102 |
| Ride comfort | 6 | 6 | 6 | 6.5 | 6 |

**Table 3 Evaluation result**

| | Example 9 | Example 10 | Example 11 |
|---|---|---|---|
| Hardness H1 | 90 | 90 | 90 |
| Hardness H2 | 65 | 65 | 65 |
| Ratio (T1/T) | 1/4 | 1/3 | 2/3 |
| Distance D1 [mm] | 8 | 8 | 8 |
| Thickness A1 [mm] | 5 | 5 | 5 |
| Weight | 100 | 100 | 100 |
| Resistance to pinch cut | 120 | 120 | 120 |
| Run flat durability | 97 | 100 | 120 |
| Vertical stiffness constant | 95 | 97 | 104 |
| Ride comfort | 6.5 | 6.5 | 5.5 |

As indicated in Tables 1 to 3, evaluation is higher in the tires of examples than in the tires of comparative examples. The tire of examples 1 to 3, 9 and 11 are not according to the invention but are useful to understand it. The tires of examples 4 to 8 and 10 are according to the invention. The evaluation result clearly indicates that the present invention is superior.

The tire described above is applicable to various vehicles.

The foregoing description is in all aspects illustrative, and various modifications can be devised without departing from the essential features of the invention.

## Claims

1. A pneumatic tire (2) comprising:
a tread (4);
a carcass (10);
a pair of beads (8); and
a pair of load support layers (20), wherein
the carcass (10) includes a carcass ply (34),
the carcass ply (34) includes a main portion (36) and a pair of turned-up portions (38), the main portion (36) extends from a portion inward of one of the beads (8) in an axial direction to a portion inward of the other of the beads (8) in the axial direction, and the pair of turned-up portions (38) are disposed outward of the beads (8), respectively, in the axial direction,
the load support layers (20) extend, in portions inward of the carcass (10), from portions inward of the beads (8), respectively, in the axial direction to portions inward of the tread (4) in a radial direction,
when a reference point P represents a point, on an outer surface of the tire (2), which is distant from a bead base line by 25 mm in the radial direction, and V represents a line normal to the outer surface at the reference point P,
a distance D1, measured along the normal line V, from the outer surface of the tire (2) to an outer side surface of the main portion (36) is greater than or equal to 3 mm and not greater than 10 mm,
wherein
the load support layers (20) include first layers (42) that extend radially outward from the portions inward of the beads (8), respectively, in the axial direction, and second layers (44) disposed outward of the first layers (42), respectively, in the radial direction, and
a hardness H1 of each first layer (42) is higher than a hardness H2 of each second layer (44),
**characterized in that**
a ratio (T1/T) of a height T1, in the radial direction, from the bead base line to an outer side end of the first layer (42), relative to a cross-sectional height T of the tire (2), is greater than or equal to 1/3 and not greater than 1/2,
wherein the dimensions and angles of the components of the tire (2) are measured in a state where the tire is mounted on a normal rim, and the tire is inflated with air to a normal internal pressure and during the measurement, no load is applied to the tire.

2. The pneumatic tire according to claim 1, wherein the hardness H1 is higher than or equal to 85 and not higher than 100.

3. The pneumatic tire according to claim 2 or 3, wherein, when F represents a thickness, of each load support layer (20), measured along the normal line V, and F1 represents a thickness, of each first layer (42), measured along the normal line V, a ratio (F1/F) of the thickness F1 to the thickness F is greater than or equal to 0.8.

## Patentansprüche

1. Luftreifen (2), umfassend:
eine Lauffläche (4);
eine Karkasse (10);
ein Paar Wülste (8), und
ein Paar Lasttragschichten (20), wobei
die Karkasse (10) eine Karkasslage (34) umfasst,
die Karkasslage (34) einen Hauptabschnitt (36) und ein Paar Umschlagabschnitte (38) umfasst, wobei der Hauptabschnitt (36) sich von einem Abschnitt innen von einem der Wülste (8) in einer axialen Richtung zu einem Abschnitt innen von dem anderen der Wüste (8) in der axialen Richtung erstreckt, und das Paar Umschlagabschnitte (38) jeweils außen von den Wülsten (8) in der axialen Richtung angeordnet ist;
die Lasttragschichten (20) sich in Abschnitten innen von der Karkasse (10) jeweils von Abschnitten innen von den Wülsten (8) in der axialen Richtung zu Abschnitten innen von der Lauffläche (4) in einer radialen Richtung erstrecken,
wenn ein Bezugspunkt P einen Punkt auf einer Außenfläche des Reifens (2) darstellt, der von einer Wulstbasislinie 25 mm in der radialen Richtung entfernt ist, und V eine Linie senkrecht zu der Außenfläche an dem Bezugspunkt P darstellt,
ein Abstand D1, entlang der senkrechten Linie V gemessen, von der Außenfläche des Reifens (2) zu einer Außenseitenfläche des Hauptabschnitts (36), größer als oder gleich 3 mm und nicht größer als 10 mm ist,
wobei
die Lasttragschichten (20) erste Schichten (42), die sich jeweils von den Abschnitten innen von den Wülsten (8) in der axialen Richtung radial nach außen erstrecken, und zweite Schichten (44) umfassen, die jeweils außen von den ersten Schichten (42) in der radialen Richtung angeordnet sind, und
eine Härte H1 jeder ersten Schicht (42) höher ist als eine Härte H2 jeder zweiten Schicht (44),
**dadurch gekennzeichnet, dass**
ein Verhältnis (T1/T) einer Höhe T1 in der radialen Richtung von der Wulstbasislinie zu einem Außenseitenende der ersten Schicht (42) relativ zu einer Querschnittshöhe T des Reifens (2) größer als oder gleich 1/3 und nicht größer als 1/2 ist,
wobei die Abmessungen und Winkel der Komponenten des Reifens (2) in einem Zustand gemessen sind, in welchem der Reifen auf eine normale Felge aufgezogen ist und der Reifen mit Luft auf einen normalen Innendruck aufgepumpt ist und während der Messung keine Last auf den Reifen aufgebracht wird.

2. Luftreifen nach Anspruch 1, wobei die Härte H1 höher als oder gleich 85 und nicht höher als 100 ist.

3. Luftreifen nach Anspruch 2 oder 3, wobei, wenn F eine Dicke jeder Lasttragschicht (20), entlang der senkrechten Linie V gemessen, darstellt, und F1 eine Dicke jeder ersten Schicht (42), entlang der senkrechten Linie V gemessen, darstellt, ein Verhältnis (F1/F) der Dicke F1 zu der Dicke F größer als oder gleich 0,8 ist.

## Revendications

1. Bandage pneumatique (2) comprenant :
une bande de roulement (4) ;
une carcasse (10) ;
une paire de talons (8) ; et
une paire de couches de support de charge (20), dans lequel la carcasse (10) inclut une nappe de carcasse (34),
la nappe de carcasse (34) inclut une portion principale (36) et une paire de portions rabattues (38), la portion principale (36) s'étend depuis une portion à l'intérieur de l'un des talons (8) dans une direction axiale jusqu'à une portion à l'intérieur de l'autre des talons (8) dans la direction axiale, et la paire de portions rabattues (38) sont disposées à l'extérieur des talons (8), respectivement, dans la direction axiale,
les couches de support de charge (20) s'étendent, dans des portions à l'intérieur de la carcasse (10), depuis des portions à l'intérieur des talons (8), respectivement, dans la direction axiale jusqu'à des portions à l'intérieur de la bande de roulement (4) dans une direction radiale,
quand un point de référence P représente un point, sur une surface extérieure du pneumatique (2), qui est distante d'une ligne de base de talon de 25 mm dans la direction radiale, et V représente une ligne normale à la surface extérieure au niveau du point de référence P,
une distance D, mesurée le long de la ligne normale V, depuis la surface extérieure du pneumatique (2) jusqu'à une surface latérale extérieure de la portion principale (36), est supérieure ou égale à 3 mm et n'est pas supérieure à 10 mm,
dans lequel les couches de support de charge (20) incluent des premières couches (42) qui s'étendent radialement à l'extérieur depuis les portions à l'intérieur des talons (8), respectivement, dans la direction axiale, et des secondes couches (44) disposées à l'extérieur des premières couches (42), respectivement, dans la direction radiale, et
une dureté H1 chaque première couche (42) est supérieure à une dureté H2 de chaque seconde couche (44),
**caractérisé en ce que**
un rapport (T1/T) d'une hauteur T1, dans la direction radiale, depuis la ligne de base de talon jusqu'à une extrémité du côté extérieur de la première couche (42), par rapport à une hauteur de section transversale T du pneumatique (2), est supérieure ou égale à 1/3 et n'est pas supérieure à 1/2,
dans lequel les dimensions et les angles des composants du pneumatique (2) sont mesurés dans un état dans lequel le pneumatique est monté sur une jante normale, et le pneumatique est gonflé avec de l'air à une pression interne normale et, pendant la mesure, aucune charge n'est appliquée au pneumatique.

2. Bandage pneumatique selon la revendication 1, dans lequel la dureté H1 est supérieure ou égale à 85 et n'est pas supérieure à 100.

3. Bandage pneumatique selon la revendication 2 ou 3, dans lequel, quand F représente une épaisseur de chaque couche de support de charge (20), mesurée le long de la ligne normale V, et F1 représente une épaisseur de chaque première couche (42), mesurée le long de la ligne normale V, un rapport (F1/F) de l'épaisseur F1 sur l'épaisseur F est supérieur ou égal à 0,8.
